# EUROPEAN PATENT SPECIFICATION

(11) **EP 3 165 412 B1**
(45) Date of publication and mention of the grant of the patent: **18.07.2018**
(21) Application number: 15193640.8
(22) Date of filing: 09.11.2015
(51) Int. Cl.: B60R 22/44

(54) **AUTOMATIC GEAR TRAIN FOR MOTORIZED SEATBELT RETRACTORS**
AUTOMATIKGETRIEBE FÜR MOTORISIERTE SICHERHEITSGURTRETRAKTOREN
TRAIN D'ENGRENAGES AUTOMATIQUE MOTORISÉ POUR RÉTRACTEURS DE CEINTURE DE SÉCURITÉ

(43) Date of publication of application: 10.05.2017
(73) Proprietor: Autoliv Development AB, 447 83 Vargarda (SE)
(72) Inventor: Mathiasson, Elias, 441 92 Alingsås (SE); Carlstedt, Lars, 447 33 Vårgårda (SE); Pettersson, Simon, 411 02 Göteborg (SE); Pettersson, Lennart, 447 34 Vårgårda (SE)
(74) Representative: AWA Sweden AB

(56) References cited:
- EP-A1- 1 531 099
- EP-A2- 1 223 088
- EP-A2- 1 223 089
- WO-A1-2010/017371
- GB-A- 2 326 623
- US-B2- 7 905 441

## Description

### Technical Field of the Invention

The present invention relates to an automatic gear train for motorized seatbelt retractors, comprising a driving pinion, a ring gear and a planet carrier carrying a plurality of planet gears.

### Background Art

Motorized electric seatbelt retractors are widely used in motor vehicles. In order to try to minimize injury to a belted occupant, it has been proposed previously to tighten the belt prior to an expected collision. Pulling the belt tight against an occupant may reduce the risk of injury significantly in a collision.

US7905441 discloses a seat belt tensioner having a drive motor and an automatic gear. The automatic gear shifts automatically as a function of load and provides two transmission paths with different transmission ratios.

However, US7905441 is considered bulky and complex and there is a need for a more simple and cost-efficient solution.

GB 2 326 623 A relates to a pretensioner for a retractor in a vehicle safety restraint belt system corresponding to the preamble of claim 1. The pretensioner comprises a drive means, a gear system linking the drive means to a retractor spool and switching means for changing the gear system ratio.

### Summary of the Invention

It is an object of the present invention to provide an improved automatic gear train for motorized seat belt retractors.

These and other objects that will be apparent from the following summary and description are achieved by an automatic gear train according to the appended claims.

According to an aspect of the present disclosure there is provided an automatic gear train for motorized seatbelt retractors, comprising a driving pinion, a ring gear and a planet carrier carrying a plurality of planet gears, wherein the ring gear is axially displaceable along a central axis of the gear train between a first position, to which it is biased and in which it is free to rotate about the central axis of the gear train, and a second position, in which it is rotationally locked with respect to a stationary portion of the gear train, and configured to move from said first position to said second position as a function of a load level on the planet gears.

The gear train may thus operate in a first mode of operation, corresponding to a high speed, low torque mode of operation, when the ring gear is situated in the first position. The gear train may thus operate in a second mode of operation, corresponding to a low speed, high torque mode of operation, when the ring gear is situated in the second position. Furthermore, the gear train is configured to automatically shift from the first mode of operation to the second mode of operation as a function of the load on the planet gears and may thus shift gear ratio when there is a need for higher output torque.

In the first position the gear train accomplishes a first gear ratio, such as, e.g., a gear ratio of 1:1, and in the second position the gear train accomplishes a second gear ratio, such as, e.g., a gear ratio of 1:5. The gear train may thus be configured to shift from a first gear ratio to a second gear ratio by displacing the ring gear from the first position to the second position when the load on the planet gears exceeds a predetermined load level.

Since the ring gear is axially displaceable along the central axis of the gear train and gear shifting is carried out by axial displacement of the ring gear a slim gear train having few components is achieved. Also, it enables a biasing force, that bias the gear train in a first mode of operation, to act in a direction that is parallel with the central axis of the gear train, which further contributes to a slim solution.

A slim motorized seatbelt retractor with a gear train that automatically gear down when there is a need for higher torque to retract belt may thus be provided.

According to one embodiment the ring gear is biased to said first position by a resilient element, preferably in the form of a spring. By modifying the magnitude of the biasing force exerted by the resilient element, the predetermined load level of the gear train may be set in a reliable manner. The resilient element may be arranged to press the ring gear against the planet carrier.

According to the invention the ring gear is connected to the planet carrier by a friction coupling arrangement in said first position. The friction coupling arrangement maintain the ring gear connected to the planet carrier as long as the load on the planet gears is below a predetermined load level.

According to the invention the friction coupling arrangement comprises a ramp device arranged to, upon relative rotation between the ring gear and the planet carrier, move the ring gear along the central axis from said first position to said second position by engaging an abutment. By modifying the ramp device, e.g. by modifying the angle of an inclined ramp surface or the shape of a curved ramp surface, the predetermined load level of the gear train may be set in a reliable manner.

According to one embodiment the ramp device comprises at least one ramp surface, preferably in the form of an inclined ramp surface.

The ramp device is thus configured to, upon relative rotation between the ring gear and the planet carrier, displace the ring gear axially away from the planet carrier.

The ramp device may be configured to displace the ring gear from said first position to said second position when a load on the planet gear exceeds a predetermined load level.

The ramp device may comprise at least one ramp surface configured to engage with an abutment. Preferably, the abutment is provided with a complementary ramp surface forming a sliding interface together with a first ramp surface of the ramp device.

According to one embodiment the ramp device is accomplished by a ramp surface formed by a notch and arranged to engage with an abutment in the form of a protrusion.

According to one embodiment said stationary portion comprises a first locking means, such as, e.g., a locking pin, arranged to mechanically engage with a locking means, such as, e.g., an aperture, of the ring gear in said second position.

According to one embodiment said stationary portion is a housing of the gear train.

According to one embodiment said first locking means comprises two members wich are connected to each other by a spring, thereby forming a resilient locking pin. This embodiment has the advantage that the resilient locking pin may be pressed together prior to engaging a complementary locking means in the form of an aperture.

A seatbelt retractor may comprise an automatic gear train of the present disclosure.

These and other aspects of the invention will be apparent from and elucidated with reference to the claims and the embodiments described hereinafter.

### Brief Description of the Drawings

The invention will hereafter be described in more detail and with reference to the appended schematic drawings.
Fig. 1 is a perspective view of a motorized seat belt retractor provided with an automatic gear train according to an embodiment of the present disclosure.
Fig. 2 is an exploded perspective view and shows the seat belt retractor in Fig. 1.
Fig. 3a is a partly sectioned perspective view of the seat belt retractor in Fig. 1 and shows the gear train in a first operation mode.
Fig. 3b is a partly sectioned view of the seat belt retractor in Fig. 1 and shows the gear train in a first operation mode.
Fig. 4a shows the gear train in a second operation mode and illustrates transition from a first operation mode to a second operation mode.
Fig. 4b is a partly sectioned view of the seat belt retractor in Fig. 1 and shows the gear train in a second operation mode.

### Detailed Description of Preferred Embodiments of the Invention

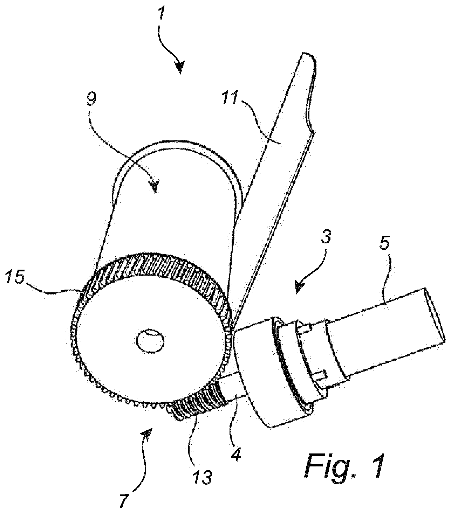

Fig. 1a shows a motorized seat belt retractor 1 provided with an automatic gear train according to an embodiment of the present disclosure. Such a seat belt retractor 1 may, e.g., be installed on a B-pillar of a vehicle for a shoulder belt system. It is however appreciated that such a seat belt retractor may be installed in other locations and that it may be used for a variety of seat belt systems.

The motorized seat belt retractor 1 comprises an electric motor 5, the automatic gear train 3, a worm gear 7 and a spool 9 onto which a safety belt 11 can be wound. The worm gear 7, which comprises a worm 13 and a worm wheel 15, is connected to an output 4 of the the automatic gear train 3 and arranged to drive the spool 9 for retraction of belt 11.

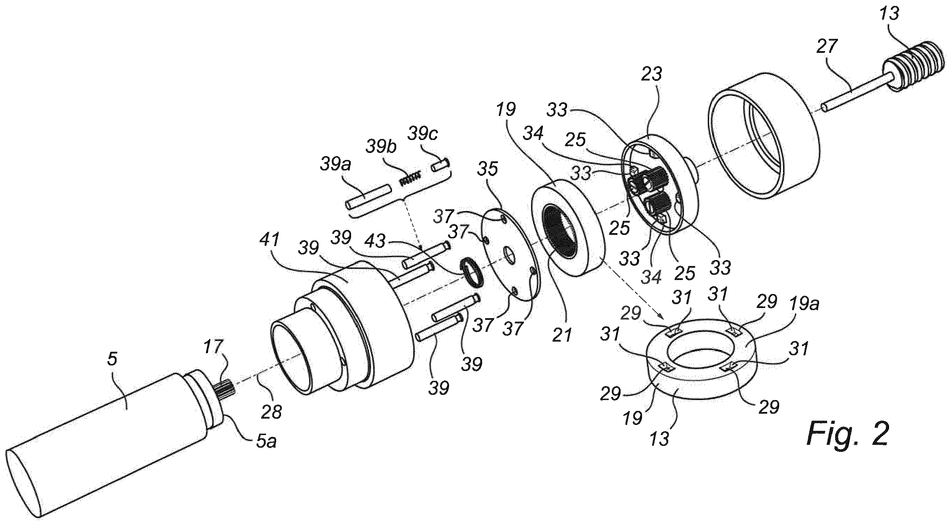

Now referring to Fig. 2 the automatic gear train 3, which is a planetary gear train, comprises a central driving pinion 17, a ring gear 19 provided with internal teeth 21, and a planet carrier 23 holding three planet gears 25 each of which is arranged to mesh with the driving pinion 17 as well as with the internal teeth 21 of the ring gear 19. Each of the ring gear 19, the planet carrier 23 and the worm 13 is mounted rotatably on a common shaft 27 which coincides with a central axis 28 of the gear train 3. The driving pinion 17, which forms a sun gear of the planetary gear train 3, is rotatably connected to the common shaft 27.

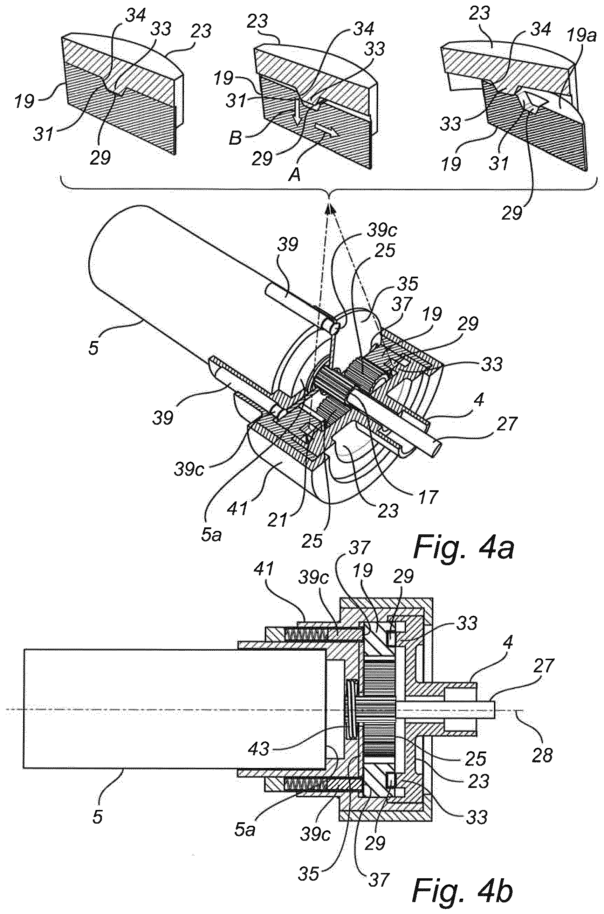

The ring gear 19 is at one side 19a provided with four notches 29, each of which has a ramp surface 31. The planet carrier 23 is provided with four protrusions 33, each of which has a ramp surface 34, which are arranged to cooperate with the notches 29 of the ring gear 19 for axial movement of the ring gear 19, as will be further described hereinafter with reference to Fig. 4a.

A locking plate 35 provided with four apertures 37 is secured to the ring gear 19 and arranged to cooperate with four spring-biased locking pins 39 secured to a gear housing 41 for locking the ring gear 19 to the stationary gear housing 41, as will be described hereinafter with reference to Figs. 4a-b. Each locking pin 39 comprises a mounting portion 39a, a biasing portion 39c and a spring 39b arranged to hold the locking pin 39 in an extended state.

A locking device is thus accomplished by the four spring-biased locking pins 39, which are secured to the gear housing 41, and the locking plate 35, which is secured to the ring gear 19.

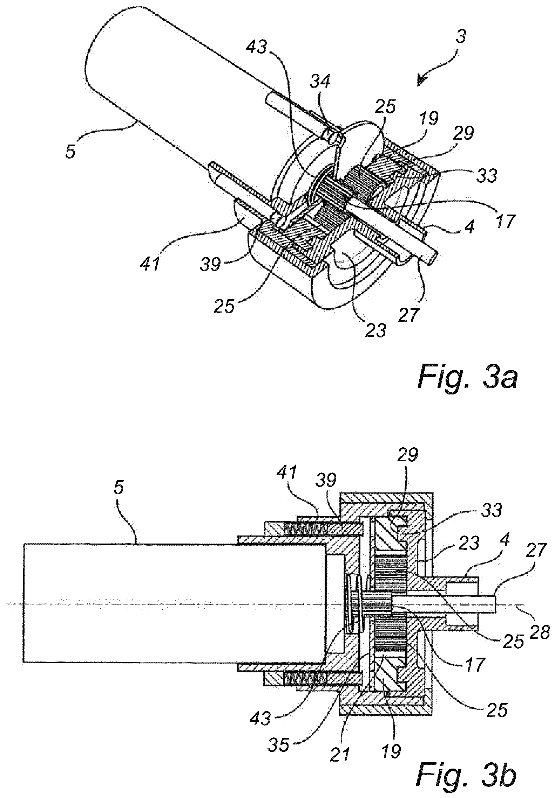

The automatic gear train 3 further comprises a biasing member, in the form of a spring 43 which is arranged between a stationary portion of the seatbelt retractor 1, such as a portion of the motor 5 or the housing 41. In this embodiment the spring 43 abuts each of a portion 5a of the motor 5 and the locking plate 35. The biasing spring 43 is thereby arranged to bias the ring gear 19 against the planet carrier 23, as illustrated in Fig. 3b.

Now referring to Figs. 3a-b each of the three planet gears 25, of which two are visible in Figs. 3a-b, meshes with the driving pinion 17 as well as with the internal teeth 21 of the ring gear 19. The planet carrier 23 has a tubular portion that forms the output 4 to which the worm 13 of the worm gear 7 is secured.

Figs. 3a-b show the automatic gear train 3 in a first operation mode in which it accomplishes a gear ratio of 1:1. In this operation mode, which is a high speed, low torque operation mode, the gear train 3 thus directly connects the driving pinion 17 to the output 4 of the gear train 3. The driving pinion 17 and the output 4 thus rotate at the same speed and the motor torque is transferred directly to the output 4.

Figs. 4a-b show the automatic gear train 3 in a second operation mode in which it accomplishes a gear ratio of 1:5. For every 5 revolutions of the driving pinion, the gear train's output 4 thus makes one revolution. In the second mode of operation the ring gear 19 is stationary and the planet gears 25 rotate relative to the ring gear 19. The planet carrier 23 carrying the planet gears 25, each of which is larger than the driving pinion 17, then rotate at a lower speed than the driving pinion 17. In the second mode of operation, which is a low speed, high torque mode of operation, the rotational speed of the motor 5 is thus geared down by the gear train 3.

The gear train 3 is configured to automatically shift from the first mode of operation to the second mode of operation as a function of the load on the output 4, i.e. as a load on the planet gears 25. Hence, when there is a need of higher torque to retract belt 11 the gear train 3 automatically shift to the second mode of operation.

With reference to Fig. 4a transition from the first mode of operation to the second mode of operation is described hereinafter.

In the first operation mode, illsutrated in Figs. 3a-b, the ring gear 19 is pressed against the planet carrier 23 by the biasing spring 43 and the planet carrier's 23 protrusions 33 are received in the notches 29 formed in the planet carrier 23. The ring gear 19 and the planet carrier 23 are thus locked to each other and rotate together as one unit when the driving pinion 17 is rotated by the motor 5.

The gear train 3 operates in the first operation mode as long as the biasing spring 43 maintain to hold the ring gear 19 locked to the planet carrier 23 by retaining the protrusions 33 in the notches 29. As belt 11 is retracted by the retractor 1 the load on the output 4, and consequently on the planet gears 25, increases and at a certain load the biasing spring 43 is no longer able to retain the ring gear 19 locked to the planet carrier 23. Then the ring gear 19 starts to rotate with respect to the planet carrier 23, as illustrated by arrow A in Fig. 4a, thereby forcing the ring gear ramp surfaces 31 to climb on the protrusions 33 of the planet carrier 23 resulting in that the ring gear 19 is displaced axially along the shaft 27 away from the planet carrier 23, as illustrated by arrow B in Fig. 4a. As the ring gear 19 rotates relative to the planet carrier 23 the ring gear 19 is thus moved axially away from the planet carrier 23 toward the locking pins 39 of the housing 41. The ring gear 19 is moved until the locking plate 35 of the ring gear 19 engages the locking pins 39. When the locking plate 35 contacts the locking pins 39 the locking plate apertures 37 may not be situated to receive a locking pin 39. In case this occurs the biasing locking pin 39 is pressed together from an extended state to a compresses state by the locking plate 35. Upon further rotation of the ring gear 19 each aperture 37 of the locking plate 35 will become situated to receive a respective locking pin 39 and then the locking pins 39 spring back and enter a respective aperture 37 of the locking plate 35 and lock the ring gear 19 to the housing 41. The axial movement and rotation of the ring gear 19 thus cause the locking plate 35 to engage the stationary locking pins 39, thereby locking the ring gear 19 to the stationary housing 41. The ring gear 19 is thus moved from a first position (Fig. 3b), in which it is free to rotate around the central axis of the gear train 3, and a second position (Fig. 4b), in which it is stationary, as a function of the load on the output 4.

As soon as the ring gear 19 has become stationary, i.e. locked to the housing 41, the gear train 19 operates in the second mode of operation.

Hence, when a predetermined load on the output 4 is exceeded the biasing spring 43 is no longer able to maintain the ring gear 19 locked to the planet carrier 23, which causes the gear train 3 to automatically shift to the second mode of operation. The gear train 3 is thus automatically transferred from the first mode of operation to the second mode of operation as a function of the load on the output 4. Hence, when there is a need for a higher output torque to retract belt 11 the gear train 3 is automatically transferred to the second mode of operation in which a higher torque is delivered to the worm gear 7. The output speed is thus reduced to achieve a higher output torque.

The side of the ring gear 19 facing the planet carrier 23, i.e. the side 19a provided with notches 29, forms a friction coupling interface together with the side of the planet carrier 23 facing the ring gear 19, i.e. the side provided with protrusions 33. The friction coupling interface comprises a ramp device for axial movement of the ring gear 19, i.e. movement of the ring gear 19 along the shaft 27. In this embodiment the ramp device is accomplished by the ramp surfaces 31 of the ring gear notches 29 and the completary ramp surfaces 34 of the planet carrier protrusions 33.

The load level at which the ring gear 19 starts to rotate relative to the planet carrier 23 is mainly determined by the inclination of the ramp surface(s) 31, 34 of the ramp device. The load level at which the ring gear 19 starts to rotate relative to the planet carrier 23 is also determined by the magnitude of the biasing force exerted by the biasing spring 43. Advantageously the biasing spring 23 is thus offering a contribution to the total load that need to be exceeded to initiate shifting from the first mode of operation to the second mode of operation. By modifying the inclination of the ramp surface(s) and/or the spring force of the biasing spring 43, the load level at which the ring gear 19 starts to rotate relative to the planet carrier 23 may thus be set at a desired level.

The gear train 3 thus comprises a ramp device arranged to, upon relative rotation between the ring gear 19 and the planet carrier 23, axially move the ring from the first to the second position. In this embodiment the ramp device comprises pairs of two complementary ramp surfaces 31, 34, which has the advantage that a very smooth and predictable movement of the ring gear 19 is achieved. It is however appreciated that the ramp device must not comprise a second, complementary ramp surface. Hence, the ramp device of the coupling interface may comprise one single ramp surface aranged to engage an abutment.

It is realized by a person skilled in the art that features from various embodiments disclosed herein may be combined with one another in order to provide further alternative embodiments.

As described hereinbefore with reference to Figs. 4a-b a locking device is accomplished by four spring-biased locking pins 39, which are secured to a stationary portion, and a locking plate 35, which is secured to the ring gear 19. It is however appreciated that this is one example of a locking device for locking the ring gear to a stationary portion. Such a locking device may be accomplished without a separate locking plate. By way of another example, in one embodiment at least one aperture is formed in the ring gear 19 and arranged to receive a stationary locking pin. In another embodiment the ring gear 19 is provided with at least one locking pin arranged to cooperate with an aperture formed in a stationary portion.

As described hereinbefore with reference to Fig. 4a a ramp device may have an inclined ramp surface. It is appreciated that a ramp surface may comprise a curved portion. It is also appreciated that a ramp surface may be curved instead of being inclined.

## Claims

1. An automatic gear train for motorized seatbelt retractors (1), comprising a driving pinion (17), a ring gear (19) and a planet carrier (23) carrying a plurality of planet gears (25), wherein the ring gear (19) is axially displaceable along a central axis (28) of the gear train (3) between a first position, to which it is biased and in which it is free to rotate about the central axis (28) of the gear train (3), and a second position, in which it is rotationally locked with respect to a stationary portion (41) of the gear train, and configured to move from said first position to said second position as a function of a load level on the planet gears (25), **characterized in that** the ring gear (19) is connected to the planet carrier (23) by a friction coupling arrangement in said first position, said friction coupling arrangement comprises a ramp device (31, 34) arranged to, upon relative rotation between the ring gear (19) and the planet carrier (23), move the ring gear (19) from said first position to said second position.

2. Automatic gear train according to claim 1, wherein the ring gear (19) is biased to said first position by a spring (43).

3. Automatic gear train according to any of the preceding claims, wherein said stationary portion comprises at least a first locking means arranged to mechanically engage with a locking means of the ring gear (19) in said second position.

4. Automatic gear train according to any of the preceding claims, wherein said at least one (39) of said locking means comprises two members (39a, 39c) wich are connected to each other by a spring (39b).

5. Seatbelt retractor (1) comprising an automatic gear (3) train according to any of the preceding claims.

## Patentansprüche

1. Automatisches Zahnradgetriebe für motorisierte Sicherheitsgurtretraktoren (1), das ein Antriebsritzel (17), ein Außenrad (19) sowie einen Planetenradträger (23) umfasst, der eine Vielzahl von Planetenrädern (25) trägt, wobei das Außenrad (19) entlang einer Mittelachse (28) des Zahnradgetriebes (3) zwischen einer ersten Stellung, in die es vorgespannt wird und in der es sich frei um die Mittelachse (28) des Zahnradgetriebes (3) dreht, und einer zweiten Stellung axial verschiebbar ist, in der es bezogen auf einen feststehenden Abschnitt (41) des Zahnradgetriebes drehfest ist, und so eingerichtet ist, dass es sich von der ersten Stellung in die zweite Stellung in Abhängigkeit von einer Höhe der Belastung der Planetenräder (25) bewegt, **dadurch gekennzeichnet, dass** das Außenrad (19) in der ersten Stellung mit dem Planetenträger (23) über eine Reibkupplungsanordnung verbunden ist, wobei die Reibkupplungsanordnung eine abgeschrägte Vorrichtung (31, 34) umfasst, die so angeordnet ist, dass sie bei relativer Drehung zwischen dem Außenrad (19) und dem Planetenträger (23) das Außenrad (19) aus der ersten Stellung in die zweite Stellung bewegt.

2. Automatisches Zahnradgetriebe nach Anspruch 1, wobei das Außenrad (19) mit einer Feder (43) in die erste Stellung vorgespannt ist.

3. Automatisches Zahnradgetriebe nach einem der vorhergehenden Ansprüche, wobei der feststehende Abschnitt mindestens ein erstes Arretiermittel umfasst, das so angeordnet ist, dass es mechanisch in ein Arretiermittel des Außenrings (19) in der zweiten Stellung eingreift.

4. Automatisches Zahnradgetriebe nach einem der vorhergehenden Ansprüche, wobei das mindestens eine (39) der Arretiermittel zwei Glieder (39a, 39c) umfasst, die miteinander über eine Feder (39b) verbunden sind.

5. Sicherheitsgurtretraktor (1), der ein automatisches Zahnradgetriebe (3) nach einem der vorhergehenden Ansprüche umfasst.

## Revendications

1. Train d'engrenages automatique pour rétracteurs de ceinture de sécurité motorisés (1), comprenant un pignon menant (17), une couronne à denture intérieure (19) et un porte-satellites (23) portant une pluralité de satellites (25), dans lequel
la couronne à denture intérieure (19) est déplaçable axialement le long d'un axe central (28) du train d'engrenages (3) entre une première position, vers laquelle elle est sollicitée et dans laquelle elle est libre de tourner autour de l'axe central (28) du train d'engrenages (3), et une deuxième position dans laquelle elle est bloquée avec une partie stationnaire (41) du train d'engrenages sans possibilité de rotation, et elle est conçue pour passer de ladite première position à ladite deuxième position en fonction du niveau de charge exercé sur les satellites (25), **caractérisé en ce que**
la couronne à denture intérieure (19) est reliée au porte-satellites (23) par un agencement d'embrayage à friction dans ladite première position, ledit agencement d'embrayage à friction comprend un dispositif à surfaces inclinées (31, 34) conçu pour faire passer la couronne à denture intérieure (19) de ladite première position à ladite deuxième position, lors d'une rotation relative entre la couronne à denture intérieure (19) et le porte-satellites (23).

2. Train d'engrenages automatique selon la revendication 1, dans lequel la couronne à denture intérieure (19) est sollicitée vers ladite première position par un ressort (43).

3. Train d'engrenages automatique selon l'une quelconque des revendications précédentes, dans lequel ladite partie stationnaire comprend au moins un premier moyen de blocage conçu pour coopérer mécaniquement avec un moyen de blocage de la couronne à denture intérieure (19) dans ladite deuxième position.

4. Train d'engrenages automatique selon l'une quelconque des revendications précédentes, dans lequel ledit au moins un (39) desdits moyens de blocage comprend deux éléments (39a, 39c) reliés l'un à l'autre par un ressort (39b).

5. Rétracteur de ceinture de sécurité (1) comprenant un train d'engrenages (3) automatique selon l'une quelconque des revendications précédentes.
